# EUROPEAN PATENT APPLICATION

(11) **EP 4 796 898 A1**
(43) Date of publication of application: **26.08.2026**
(21) Application number: 26158538.4
(22) Date of filing: 13.02.2026
(51) Int. Cl.: G01C 21/30, G01C 21/34, G06F 16/29

(54) **METHOD AND APPARATUS FOR PROVIDING A RESILIENT PATH-BASED MAP MATCHER**

(30) Priority: 19.02.2025 US 202519057461
(71) Applicant: HERE Global B.V., 5611 ZT Eindhoven (NL)
(72) Inventor: LISOVETS, Volodymyr, Berlin (DE); MAISCHBERGER, Mirko, Berlin (DE); LOMBARDELLI, Fabio, Berlin (DE)
(74) Representative: Cohausz & Florack

(57) **Abstract**

An approach is provided for path-based map matching. The approach involves, for instance, executing a first pass map-matching process to determine on-road candidate matches for observation points of the trajectory. The approach also involves determining emission probabilities of the candidate matches and transition probabilities between on-road candidates of subsequent observations, and determining a most probable path based on the emission and transition probabilities. The approach further involves determining a set of a predetermined number of on-road candidate matches from the most probable path. The approach further involves marking at least one match in the set as not matched based on determining that an alternate transition with a higher transition probability than the at least one transition exists. The approach further involves redetermining the most probable path using a second pass map-matching process based on the marked match.

## Description

### BACKGROUND

Map-matchers often are used to process trajectories of probe points to identify the correct road or path on which a probe device or vehicle is traveling, and/or to determine the device or vehicle's location on that road or path. However, current map-matchers can often encounter issues of lack of sufficient context (e.g., lack of sufficient number of probe points or lack of road network information of the area, such as private territory or parking area) in certain sections of the trajectory, particularly at the beginning and end of the trajectory. The lack of context can cause the resulting map matching to have increased error. In the context of location-based services (LBS), inaccurately matched probe data trajectories can have far-reaching consequences, impacting the reliability and usefulness of LBS applications such as navigation, route planning, real-time tracking and traffic information services. Moreover, the consequences of inaccurate map matching extend beyond the individual users and businesses relying on LBS applications. Incorrect trajectory data can also lead to issues with mapping databases themselves, which are essential for providing accurate and up-to-date information about road networks, traffic conditions, and other relevant data.

### SOME EXAMPLE EMBODIMENTS

Therefore, there is a need for a path-based map matching system that is resilient to lack of context (i.e., "resilient" referring to an ability to provide accurate map matching results even when context information is missing or sparse).

According to one embodiment, a method comprises executing a first pass map-matching process to determine one or more on-road candidate matches for each observation point of the trajectory based on one or more emission probabilities. The method may be a computer-implemented method. The one or more on-road candidate matches correspond to one or more road segments of digital map data of a geographic database. The method also comprises determining one or more transition probabilities between two or more on-road candidates of subsequent observations. The method further comprises determining a most probable path based on the one or more emission probabilities and the one or more transition probabilities. The method further comprises determining a set of a predetermined number of matches from the most probable path, wherein the set includes at least one transition among the predetermined number of matches in the set. The method further comprises marking at least one match in the set as not matched based on determining that an alternate transition with a higher transition probability than the at least one transition exists. The method further comprises redetermining the most probable path using a second pass map-matching process based on the at least one marked match. The method further comprises providing the redetermined most probable path as an output.

According to another embodiment, an apparatus comprises at least one processor, and at least one memory including computer program code for one or more computer programs, the at least one memory and the computer program code configured to, with the at least one processor, cause, at least in part, the apparatus to execute a first pass map-matching process to determine one or more on-road candidate matches for each observation point of the trajectory based on one or more emission probabilities. The one or more on-road candidate matches correspond to one or more road segments of digital map data of a geographic database. The apparatus is also caused to determine one or more transition probabilities between two or more on-road candidates of subsequent observations. The method further comprises determining a most probable path based on the one or more emission probabilities and the one or more transition probabilities. The apparatus is further caused to determine a set of a predetermined number of matches from the most probable path, wherein the set includes at least one transition among the predetermined number of matches in the set. The apparatus is further caused to mark at least one match in the set as not matched based on determining that an alternate transition with a higher transition probability than the at least one transition exists. The apparatus is further caused to redetermine the most probable path using a second pass map-matching process based on the at least one marked match. The apparatus is further caused to provide the redetermined most probable path as an output.

According to another embodiment, a computer-readable storage medium carries one or more sequences of one or more instructions which, when executed by one or more processors, cause, at least in part, an apparatus to execute a first pass map-matching process to determine one or more on-road candidate matches for each observation point of the trajectory based on one or more emission probabilities. The one or more on-road candidate matches correspond to one or more road segments of digital map data of a geographic database. The apparatus is also caused to determine one or more transition probabilities between two or more on-road candidates of subsequent observations. The method further comprises determining a most probable path based on the one or more emission probabilities and the one or more transition probabilities. The apparatus is further caused to determine a set of a predetermined number of matches from the most probable path, wherein the set includes at least one transition among the predetermined number of matches in the set. The apparatus is further caused to mark at least one match in the set as not matched based on determining that an alternate transition with a higher transition probability than the at least one transition exists. The apparatus is further caused to redetermine the most probable path using a second pass map-matching process based on the at least one marked match. The apparatus is further caused to provide the redetermined most probable path as an output.

According to another embodiment, an apparatus comprises means for executing a first pass map-matching process to determine one or more on-road candidate matches for each observation point of the trajectory based on one or more emission probabilities. The one or more on-road candidate matches correspond to one or more road segments of digital map data of a geographic database. The apparatus also comprises means for determining one or more transition probabilities between two or more on-road candidates of subsequent observations. The apparatus further comprises means for determining a most probable path based on the one or more emission probabilities and the one or more transition probabilities. The apparatus further comprises means for determining a set of a predetermined number of matches from the most probable path, wherein the set includes at least one transition among the predetermined number of matches in the set. The apparatus further comprises means for marking at least one match in the set as not matched based on determining that an alternate transition with a higher transition probability than the at least one transition exists. The apparatus further comprises means for redetermining the most probable path using a second pass map-matching process based on the at least one marked match. The apparatus further comprises means for providing the redetermined most probable path as an output.

In addition, for various example embodiments described herein, the following is applicable: a computer program product may be provided. For example, a computer program product comprising instructions which, when the program is executed by a computer, cause the computer to perform any one or any combination of methods (or processes) disclosed.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing the method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of providing a path-based map matcher, according to one embodiment;
FIG. 2 is a diagram of components of a map matching platform, according to one embodiment;
FIG. 3 is a flowchart of a process for path-based map matching, according to one embodiment;
FIG. 4 is a diagram illustrating an example of path-based map matching of probe points, according to one embodiment;
FIG. 5 is a diagram illustrating an example trellis diagram for path-based map matching, according to one embodiment;
FIGs. 6-8 are diagrams of examples of improving map matching results, according to various embodiments;
FIG. 9 is a diagram of a geographic database, according to one embodiment;
FIG. 10 is a diagram of hardware that can be used to implement an embodiment;
FIG. 11 is a diagram of a chip set that can be used to implement an embodiment; and
FIG. 12 is a diagram of a mobile terminal that can be used to implement an embodiment.

### DESCRIPTION OF SOME EMBODIMENTS

Examples of a method, apparatus, and computer program for providing a path-based map matcher are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. In addition, the embodiments described herein are provided by example, and as such can also "one embodiment" is used synonymously as "one example embodiment." Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

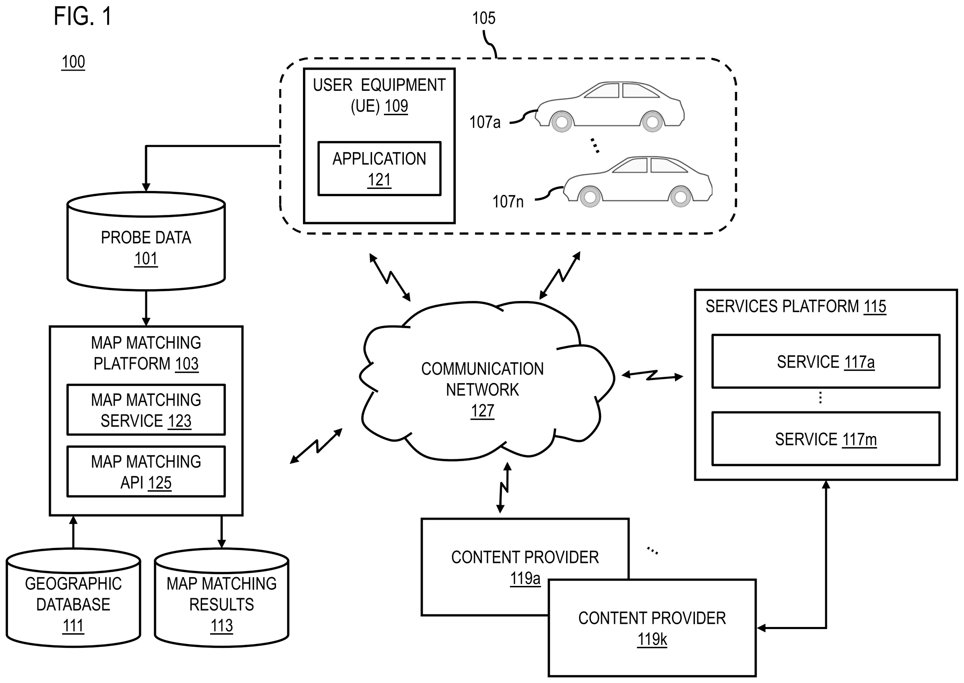

FIG. 1 is a diagram of a system capable of providing a path-based map matcher, according to one embodiment. Map Matching solutions aim to find a correspondence between a trajectory or sequence of probe point locations (also referred to as observation points) and a path location along a sequence of road segments on a map. Different conventional approaches are available, some of a geometric nature (e.g., finding a proximate road shape that corresponds to a set of observation points in a probe trace or trajectory), others of a probabilistic nature (e.g., finding the most probable location on a road based on knowledge about the road network characteristics).

For example, probe data 101 (e.g., time-stamped location coordinates determined by Global Navigation Satellite Systems (GNSS), such as GPS, Galileo, GLONASS, and/or any other equivalent positioning technology) is used as a widely available resource in the map making industry for a variety of mapping and/or navigation functions such as, but not limited to, identifying map attributes such as new geometry and change of link direction of travel (DoT), speed limit, and/or the like. As part of a raw probe data processing pipeline, map matchers (e.g., a map matching platform 103) are used to identify the road segment/link on which probe devices 105 (e.g., probe vehicles 107a-107n, probe user equipment (UE) device 109, etc.) are travelling and to determine the device/vehicle location on that road segment. Significant progress has been made in the area of map matching technologies and algorithms over the past decade, and these map matching technologies are widely used for many large-scale location-based applications and traffic management services, such as vehicle navigation, traffic and incident reporting, etc. Although the various embodiments described herein as discussed with respect to map matching probe data 101 or trajectories, it is contemplated that the embodiments are also applicable to any other sequence of coordinates in general (e.g., a sequence of coordinates representing a geometry of road segments for a map-to-map conflation).

Generally, there are two types of map matchers: (1) point-based map matchers, and (2) path-based map matchers. For example, a point-based map matcher takes an individual GNSS data point (or probe point) to match to the road segment or link based on, for instance, a maximum likelihood. On the other hand, a path-based map matcher can produce more accurate results by taking more information (e.g., context information) in the form of a trajectory or sequence of GNSS or probe/observation points (e.g., instead of a single observation point) and using more a complicated approach (e.g., a probabilistic approach) to map match a probe trajectory to a road segment.

Despite these developments, map matching still presents significant technical problems and challenges for the map making industry. For example, conventional map matching approaches are effective provided that the actual vehicle position is located on a road that is known on a digital map (e.g., the digital map data of a geographic database 111). However, many vehicle positions may correspond to areas where no respective road link is located (e.g., unmapped parking lots, driveways, off-road areas, etc.). This is a frequent occurrence at the beginning and end of a path or trajectory, for example, where a vehicle parks away from the road network. A map matcher may be forced to find the closest road link to the parking location, resulting in a false map-matched location (e.g., map matching results 113). Similar situations occur at the beginning of the path, but may also occur while on-route (e.g. unmapped road).To address these technical challenges, the system 100 of FIG. 1 introduces a capability to implement map matching system that incorporates an algorithm that decides when to ignore observations (e.g., probe/observation points of a trajectory) that lead to the unexpected transitions between matched points that lead to false map-matched locations (e.g., an observation point being matched to a road segment when it is actually off-road or otherwise at an unmapped location). In one example embodiment, first, a trace or trajectory (e.g., probe data 101) is map matched (e.g., via a probabilistic path-based map matcher), and then one or more sections of the trajectory (e.g., the beginning, end, or any other designated section of the trip) are evaluated to identify more reasonable transitions compared to the initially selected ones. "More reasonable" or "better" transitions refer, for instance, to alternate transitions between candidate matches with similar (e.g., within a threshold probability range of each other) or higher emission probabilities and/or a better transition path (e.g., a transition path that is shorter than another path) as the transitions determined from a first pass of the map matcher. In other words, a "better" transition can be determined as more probable than another path based on the output of a probabilistic map matcher.

In one embodiment, transitions are compared by evaluating transitions paths normalized by a distance (e.g. straight-line distance) between observations. If a more reasonable or better transition is found, the associated matched point is flagged as "unknown" (i.e., not matched) due to insufficient evidence that the originally selected most probable path or route (e.g., determined from the first pass of the map matcher) was travelled. It is noted that the above embodiment for determining when a transition (e.g., alternate transition) is better than another transition (e.g., transition from original most probable path) is provided by way of illustration and not as limitations. It is contemplated that any equivalent metric of transition quality can be used according to the embodiments described herein. For example, a transition with a shorter distance than another transition can be classified as better than the transition with a longer distance.

After flagging any originally matched points as not matched or unknown as descried above, the process for determining the most probable path (e.g., via an internal Viterbi algorithm) is then recursively executed, excluding the points that led to the sub-optimal transitions until no sub-optimal transition remain. In some embodiments, the recursive execution of the most probable path process can in addition or alternately be terminated based on an interval defined by the trajectory's beginning, end, and/or any other designated section of the trajectory.

The approach of the various embodiments described here constitutes a major improvement in performance of probabilistic path-based map matching because it avoids inaccuracies caused by unrealistic travel loops and/or made-up vehicle locations (e.g., on road matches when there the vehicle has not actually travelled on the matched road segment).

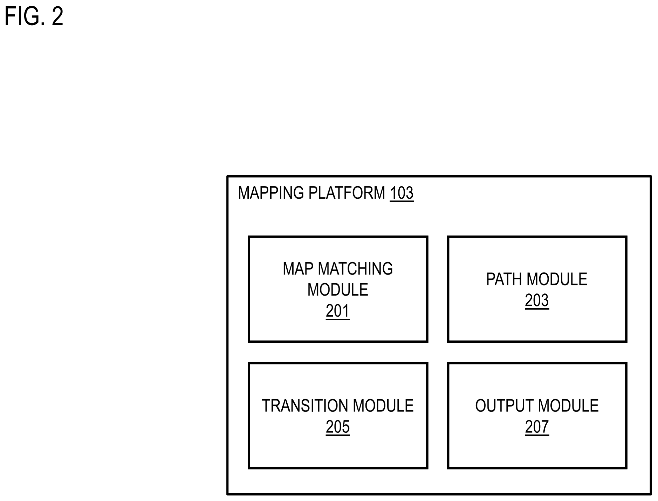

FIG. 2 is a diagram of components of the map matching platform 103, according to one embodiment. In one embodiment, as shown in FIG. 2, the map matching platform 103 includes one or more components for providing a path-based map matcher according to the various embodiments described herein. It is contemplated that the functions of these components may be combined or performed by other components of equivalent functionality. In this embodiment, the map matching platform 103 includes a map matching module 201, a path module 203, a transition module 205, and an output module 207. The above presented modules and components of the map matching platform 103 can be implemented in hardware, firmware, software, or a combination thereof. Though shown as a separate entity in FIG. 1, it is contemplated that the map matching platform 103 may be implemented as a module of any other component of the system 100 (e.g., a component of a services platform 115, services 117a-117m (also collectively referred to as services 117), vehicle 107, UE 109, application 121 executing on the UE 109, content providers 119a-119k (also collectively referred to as content providers 119), etc.). In another embodiment, one or more of the modules 201-207 may be implemented as a cloud-based service, local service, native application, or combination thereof (e.g., a map matching service 123 and/or map matching application programming interface (API) 125 accessible over a communication network 127). The functions of the map matching platform 103 and the modules 201-207 are discussed with respect to figures below.

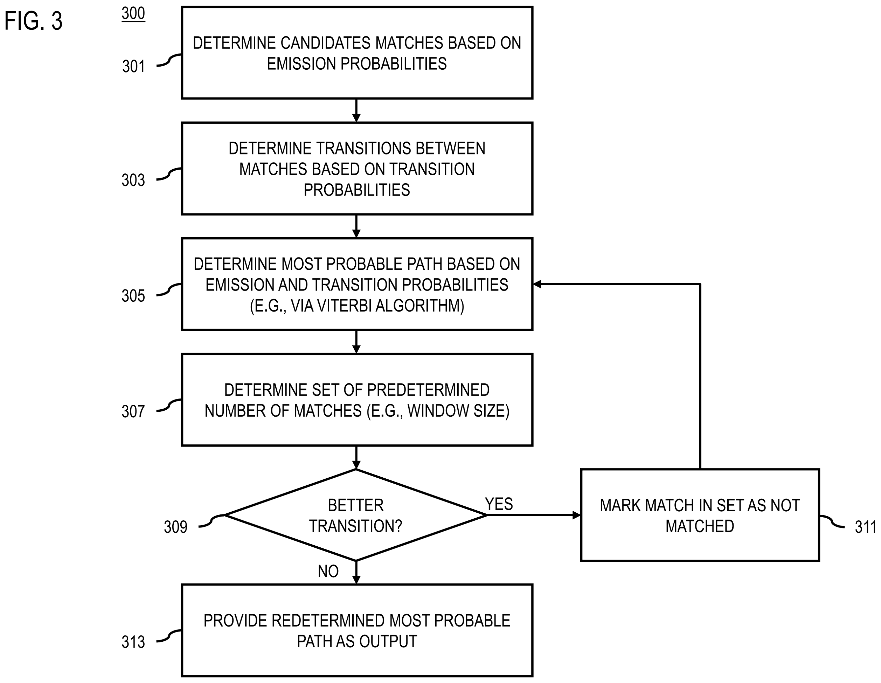

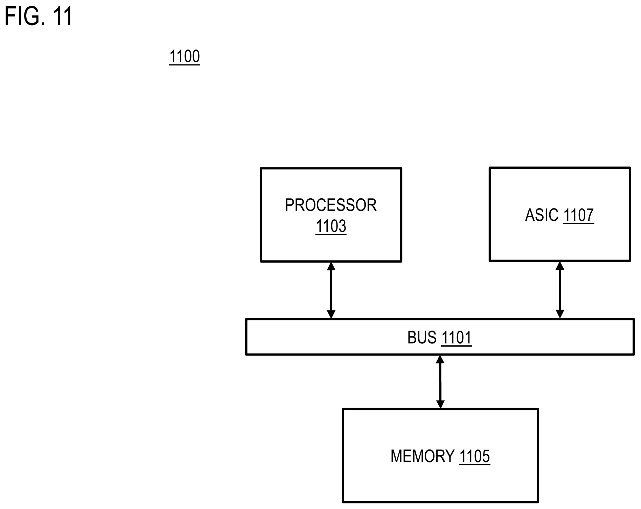

FIG. 3 is a flowchart of a process 300 for path-based map matching, according to one embodiment. In various embodiments, the map matching platform 103 and/or one or more of its modules 201-207 as shown in FIG. 2 may perform one or more portions of the process 300 and may be implemented in, for instance, a chip set including a processor and a memory as shown in FIG. 11. As such, the map matching platform 103 and/or one or more of its modules 201-207 can provide means for accomplishing various parts of the process 300, as well as means for accomplishing embodiments of other processes described herein in conjunction with other components of the system 100. Although the process 300 is illustrated and described as a sequence of steps, its contemplated that various embodiments of the process 300 may be performed in any order or combination and need not include all of the illustrated steps.

In one embodiment, the map matching platform 103 uses a probabilistic path-based map matcher. For example, in such a path-based map matcher, the problem is modelled as a Hidden Markov Model (HMM), which allows for estimating a probability of a probe trace or trajectory continuing on connected road segments (e.g., road segments mapped in the digital map data of the geographic database 111). Individual road segments (or candidates, targets, element projections associated with the road segments) are states of the HMM, and probe/observation point locations (or projected candidate locations/matches) are state measurements. The goal is to match the measurement to the state, which translates to an identified road segment for the probe/observation point location. The advantage of using an HMM is that the connectivity and directionality knowledge of the road map (e.g., context information) affects the probability of a state being matched. This means that overly complex, unlikely, or illegal maneuvers are far less probable as outcomes for the map matching. However, as explained above, such context information can be limited at the beginning, end, and unmapped sections of the trajectory, thereby potentially increasing the likelihood of false matches.

In the various embodiments described herein, a trace representing a trajectory (e.g., probe data 101) of, e.g., a probe device 105 such as a vehicle 107 or UE 109, is received. As used herein, a probe data trace or trajectory is a sequence of observation data points collected from a probe device 105, using location sensors such as but not limited to a Global Navigation Satellite System (GNSS) (e.g., Global Positioning System (GPS) or equivalent) or other location-tracking equipment, that captures the movement of a vehicle 107 or UE 109 over time. Each observation data point in the trace includes information such as timestamp, latitude, and longitude, which collectively represent the path or trajectory traveled.

In one embodiment, the number of observation points in the received trajectory can be resampled to a target frequency, interval, or density (e.g., one observation point per X meters). The target frequency, interval, or density can be selected to balance computational load against map matching resolution or fidelity. For example, shorter intervals can be used to ensure areas with high densities of map features or road segments occurring close together can be resolved, while longer intervals can be used to reduce the number of observation points that have to be map matched to reduce the computational resource burden (e.g., in terms of processing cycles, memory storage requirements, bandwidth for transmitting data, etc.) associated with map matching. One example interval for observation points in a trajectory can be based on the average length of a vehicle 107 (e.g., 4 meters).

In step 301, a first pass map-matching process is run, finding on road candidates for each observation (point on the trace) and calculating emission probabilities for each match between an observation and a road segment. Emission probabilities represent the likelihood of observing a certain position given a specific state (or road segment) on the map. They measure how likely it is that a given observation point in the trajectory (e.g., GNSS/GPS position) corresponds to a particular road segment in the digital map data. Emission probabilities can be used for determining how well the observed data fits the possible paths on the map.

In summary, the map matching module 201 executes a first pass map-matching process to determine one or more on-road candidate matches for each observation point of the trajectory based on one or more emission probabilities, wherein the one or more on-road candidate matches correspond to one or more road segments of digital map data of a geographic database. As used herein, a first pass map-matching process is the first or initial determination of on road candidates before a subsequent redetermination of the on road candidates or most probable route in a later step. In addition, the "map-matching process" refers to the probabilistic HMM-based map matching process described above or equivalent. The individual road segments that can be matched to each observation point represent the multiple states for the HMM.

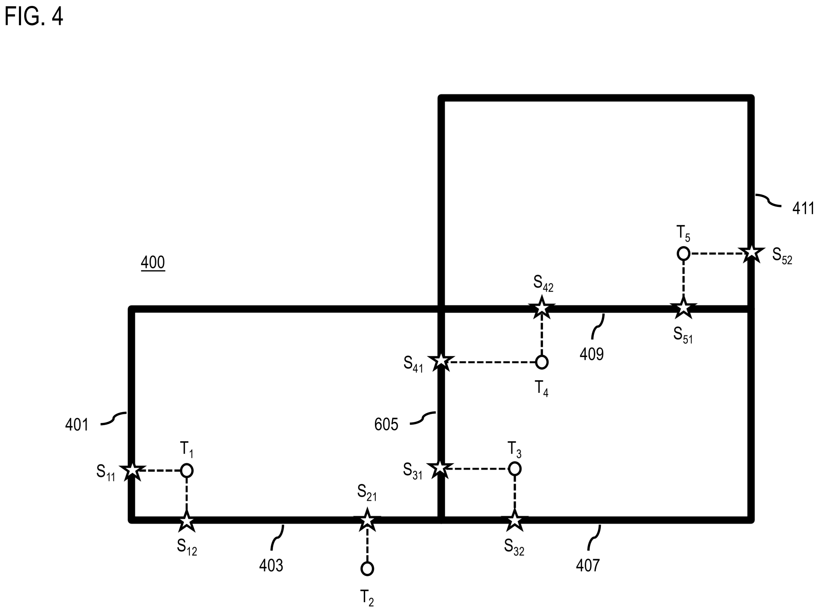

FIG. 4 which is a diagram illustrating an example of path-based map matching of probe points, according to one embodiment. In the example of FIG. 4, a probe trajectory consists of five probe points labeled T₁ to T₅ based on the chronological order of their capture (e.g., points comprising a time stamp and detected latitude and longitude). As shown, probe point T₁ is projected to element S₁₁ on road segment 401 of a road network 400 and to element projection S₁₂ on road segment 403; probe point T₂ is projected to element projection S₂₁ on road segment 403; probe point T₃ is projected to element projection S₃₁ on road segment 405 and to element projection S₃₂ on road segment 407; probe point T₄ is projected to element projection S₄₁ on road segment 405 and to element projection S₄₂ on road segment 409; and probe point T₅ is projected to element projection S₅₁ on road segment 409 and to element projection S₅₂ on road segment 411. Each of the element projections represent possible states (e.g., possible map matched candidate locations) of the respective probe points T₁-T₅. The list of element projections in this example includes: S₁₁, S₁₂, S₂₁, S₃₁, S₃₂, S₄₁, S₄₂, S₅₁, and S₅₂.

A first pass map-matching process is run, finding on-road candidates for each observation (point on the trace) and calculating emission probabilities and transition probabilities between candidates. Then, an internal Viterbi algorithm is executed to find the most probable path.

At step 303, the path module 203 determines one or more transition probabilities of the one or more on-road candidate matches/states obtained in step 301. Transition probabilities represent the likelihood of moving from one state (or road segment of an on road match) to another. By way of example, they take into account the physical constraints and connectivity of the road network, such as the distance between segments and the travel time. Transition probabilities help in determining the most plausible path by considering the feasibility of moving from one segment to another.

At step 305, the path module 203 determines a most probable path based on the one or more emission probabilities of the one or more on-road candidate matches and on the one or more transition probabilities between two or more on-road candidate of subsequent observations. In one embodiment, the path module 303 executes an internal Viterbi algorithm to find the most probable path. The Viterbi algorithm finds the most probable path in a HMM by determining the sequence of states (road segments) that maximizes the overall probability of the observed sequence (probe points). It uses a dynamic programming approach to compute the highest probability path through a trellis diagram, where each node represents a possible state with an associated probability, and each transition between states has a corresponding probability based on factors like distance and connectivity. By iteratively calculating and storing the maximum probabilities of reaching each state from the start to the end of the sequence, the Viterbi algorithm identifies the optimal path that best matches the observed data points to the corresponding road segments.

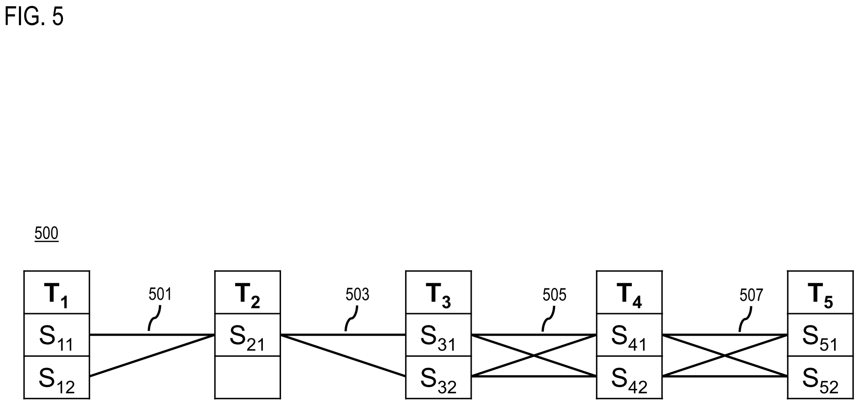

FIG. 5 is a diagram illustrating an example trellis diagram 500 for path-based map matching, according to one embodiment. The trellis diagram 500 is based on the example of FIG. 4 and lists probe points T₁-T₅ along with their corresponding element projections or states. For example, probe point T₁ has two possible states or element projections S₁₁ and S₁₂; probe point T₂ has one possible state or element projection S₂₁; probe point T₃ has two possible states or element projections S₃₁ and S₃₂; probe point T₄ has two possible states or element projections S₄₁ and S₄₂, and probe point T₅ has two possible states or element projections S₅₁ and S₅₂. Each state is associated with probability that the state or element projection is a true state of the corresponding probe point. For example, the trellis diagram 500 will include a probability that probe point T₁ is in state S₁₁ (e.g., P(S₁₁|T₁)) and another probability that probe point T₁ is in state S₁₂ (e.g., P(S₁₂|T₁)), and so on for each probe point and state pair.

The trellis diagram 500 also includes all possible transitions between the states of adjacent probe points. As shown, transitions 501 occur between states S₁₁ and S₁₂ of probe point T₁ to state S₂₁ of probe point T₂; transitions 503 occur between states S₂₁ of probe point T₂ and states S₃₁ and S₃₂ of probe point T₃; transitions 505 occur between states S₃₁ and S₃₂ of probe point T₃ and states S₄₁ and S₄₂ of probe point T₄; and transitions 507 occur between states S₄₁ and S₄₂ of probe point T₄ and states S₅₁ and S₅₂ of probe point T₅. As with the possible states of probe point, each transition between the states of two adjacent probe points is also associated with a transition probability. For example, between probe points T₁ and T₂, there is the transition probability for the path going from state S₁₁ to S₂₁ (e.g., P(S₁₁ →S₂₁)), and another transition probability for the path going from state S₁₂ to S₂₁ (e.g., P(S₁₂ →S₂₁)), and so on for each combination of states between probe points. The transition probability of each state to state transition is based on the line of sight distance as well as the shortest path distance between each state pair.

To determine the best path through the trellis diagram 500, the path module 203 can use a Viterbi algorithm or equivalent to the determine the path through the trellis diagram 500 with the highest probability (e.g., high sum or state and transition probabilities). Because each state is associated with a map matched road segment or portion thereof, the high probability path through the states and transitions of the trellis diagram 500 can be converted to a sequence of corresponding road segments indicating the best map matched path (e.g., the most probable path) given the input probe points and element projections.

However, as previously discussed, vehicle positions (e.g., observation points in the trajectory) may correspond to areas where no respective road link is located or mapped. This can cause potential false matches because conventional path-based map matching may nonetheless match these true off road or unmapped locations to a mapped road segments even when the probe device 105 has not actually travelled the road segment.

In one embodiment, as the problem more frequently occurs at the beginning or end of trajectories, the beginning and end of the traces are further evaluated at the next step. For example, a cut-off distance (e.g. in meters) for the start and end traces may be set depending on the area type/road density, obtaining start/end trace segments. Other distances are possible. For example, shorter distances may provide for faster processing time, while longer distances may filter more errors. In addition, although the various embodiments may discuss evaluating the beginning and end of trajectories, it is contemplated that any section or portion of the trajectory can be evaluated for potential false matches according to the various embodiments described herein. In other words, the most probable path returned by Viterbi algorithm in step 305 is evaluated and if necessary improved.

Accordingly, at step 307, the transition module 205 determines a set of a predetermined number of matches from the most probable path, wherein the set includes at least one transition among the predetermined number of matches in the set. The predetermined number of matches (N) represent an evaluation "window" (e.g., N = 3 points or any other designated number). For example, at the beginning, end, or any other selected portion of the most probable path, a sliding window of N points is selected.

At step 309, for each set of N points, the transition module 205 evaluates whether a transition with a higher transition probability exists. In other words, the transition module 205 determines whether an alternate transition with a higher transition probability than the at least one transition (associated with the selected set or window) exists. In one embodiment, the selected transition in the set is compared to other transitions between candidates of the same two consecutive observations of the selected transition. In one embodiment, only transitions between candidates with similar or better emission probabilities are considered.

For example, transitions between candidates of consecutive observations can be compared by evaluating transitions paths normalized by a distance (e.g. straight-line distance) between observations. Comparisons between these transitions reveal the existence of a much more likely transition. From the perspective of comparing an alternate transition with a transition determined from the first pass map matching, the determining that the alternate transition exists is based on metrics such as but not limited to a transition probability of the at least one transition, a transition probability of the alternate transition, a logarithm of the transition probability of the at least one transition, a logarithm of the probability of the alternate transition, or a combination thereof. For example, the probability transition can be calculated as follows: $p \left({d}_{t}\right) = \frac{1}{β} {e}^{\frac{- {d}_{t}}{β}}$
Where ${d}_{t} = \left|{\left‖{z}_{t}-{z}_{t + 1}\right‖}_{great circle}-{\left‖{x}_{t , i ∗}-{x}_{t + 1 , j ∗}\right‖}_{route}\right|$
And where *zₜ* is the position t-th input position of the trajectory and *x_{t,i*}* is the selected state (among all candidate states) corresponding to the *zₜ* position.

In addition or alternatively, the determining that the alternate transition exists is based on a distance of the at least one transition determined in the first-pass map-matching process (e.g., selected by the Viterbi algorithm) and a distance of the alternate transition. In yet another embodiment, the determining that the alternate transition exists is based on determining that a distance (e.g., length) of the at least one transition is at least a predetermined value or a constant threshold (e.g., two times the straight-line distance) greater than a distance (e.g., length) of the alternate transition. The above example evaluations between transitions is provided by way of illustration and not as limitations. It is contemplated that transitions between candidate matches in the set can be compared using any equivalent quality metric.

At step 311, if a more reasonable or better transition is found with respect to the one selected in the first pass of the map-matching process (e.g., by the Viterbi algorithm), the associated matched point is flagged as "unknown" (not matched) due to insufficient evidence that the originally selected route was travelled. In other words, the transition module 205 marks at least one observation in the set as not matched based on determining that a better alternate transition than the at least one transition (in the initial set) exists. As previously discussed, the determination, for instance, can be based on transition probabilities and/or the distance/length of the transition paths (e.g., normalized based on the straight-line distance between observations). In this case, the alternate transition is a transition between two consecutive matched points in the set that was not included in the most probable path generated during the first pass map matching process, while the at least one transition refers to a transition included in the most probable path generated during the first pass map matching process (e.g., determined by the Viterbi algorithm).

The process returns to step 305 where the Viterbi algorithm is executed again on the same emission and transition probabilities, excluding the points that led to the sub-optimal transitions. This advantageously results in the map matching platform 103 not trying to match an observation point that is not likely to be on-road, and thus has not true match on a road segment. In other words, the path module 203 redetermines the most probable path using a second pass map-matching process based on the at least one marked match with the at least one marked match is excluded from the redetermining of the most probable path. In this way, in one embodiment, the most probable path (from the first pass), the redetermined most probable path (from the second pass), or a combination thereof are determined based on a Viterbi algorithm. In addition, the first pass map-matching process, the second pass map-matching process, or a combination thereof is based on a Hidden Markov Model. In one embodiment, the process can end with the second pass map-matching process, and the process 300 proceeds to step 313.

In an alternate embodiment, the set of predetermined number of matches is iteratively evaluated as a sliding window over the most probable path. For example, the window then advances to the next points/matches in the most probable path for evaluation and repeats transition evaluation with the next points/matches. This process continues until no higher transition probability is found within the current points window or the cut-off distance is reached. In other words, the iterative evaluation ends based on determining that there are no remaining alternate transitions or based on determining that that sliding window is more than a threshold number of observation points, a threshold distance, or a combination thereof from a beginning or an end of the trajectory. The same process is executed for the end of the path or for any other selected section of the path. Therefore, in one embodiment, the set is determined within a threshold number of matches (e.g., observation points that are matched to a corresponding road segment) or a threshold distance (e.g., X meters) from a beginning, an end, and/or any other designated section of the most probable path.

At step 313, the output module 307 provides the map matched path (e.g., redetermined probable path if a better transition is found) generated according to the embodiments above (e.g., map matching results 113) as an output. In one embodiment, the output can include any one or more of: (1) a list of unmatched points; (2) for each matched point, the output can include the topology segment ID (e.g., road link ID) and the fraction/offset along with the matched coordinates; and/or (3) for each pair of matched points, the output includes the sequence of topology segments (e.g., path) to connect the pair with a route. It is contemplated that the output can be used by any component of the system 100 including but not limited to the services platform 115, services 117, content providers 119, vehicles 107, UEs 109, applications 121, etc. for any function that uses path-based map matching outputs. In one embodiment, the output (e.g., stored map matching results 113, residing in-memory on a client device, or non-persisted memory for quick delivery) can be accessed via a map matching service 123, a map matching API 125, or any equivalent interface to the map matching platform 103 or functions thereof. In one embodiment, the output of the map matching platform 103 (e.g., map matching results 113) can be used for any number of applications relying on computationally less intensive map matching. These use cases include but are not limited to: (1) map making; (2) providing better navigation experiences (e.g., especially for cheaper user devices which may have lower quality GPS or other positioning systems and for battery operated devices); (3) providing location intelligence; and (4) improving autonomous driving or highly assisted driving, among other possible use cases.

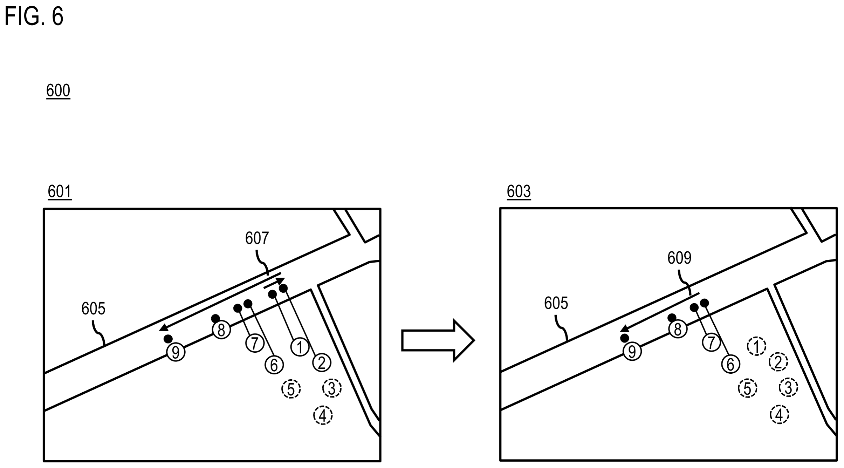

FIGs. 6-8 are diagrams of various examples of improving map matching results, according to various embodiments. FIG. 6 illustrates an example 600 comprising conventional map matching results 601 based on a conventional path-based map matcher and improved map matching results 603 based on the resilient map matcher of the various embodiments described herein. In this example, observations points 1-9 are numerically sequenced based on their respective chronological order with point 1 being the earliest observation point of the trajectory and point 9 being the latest point. Observation points indicated by a solid circle are points that have been matched to the corresponding road segment 605 with the solid dark dots on the road segment 605 indicate their respective matched locations on the road segment 605. Unmatched observation points are indicated by a dashed circle to indicate that there is insufficient evidence (e.g., based on emission probabilities) to match them to any specific road segment.

As shown in example 600, observations points 1-9 of a trajectory are map matched to a road network comprising road segment 605. In the conventional map matching results 601, observations points 1, 2, and 6-9 have been matched to road segment 605, with points 3-5 remaining unmatched. The matched points 1, 2, and 6-9 are linked to dark dots on the road segment 605 to indicate the respective locations on the road segment 605 where they have been matched. However, the conventional map matching results 601 are unrealistic because it appears that the determined most probable path 607 moves in one direction from matched point 1 to matched point 2, and then reverses direction to move from matched point 2 to the next matched points 6-9. While possible, it is unlikely that the vehicle associated with the trajectory actually doubled back on the road segment 605 as shown in the conventional map matching results 601.

To address this issue, the improved map matching results 603 are based on path-based mapping matching that evaluates if better transitions exist for the route using the various embodiments of process 300. In this case, the map matching platform 103 evaluates the initial window of the first three matched points of the most probable path 607 (i.e., matched points 1, 2, and 6). In this case, the transition from matched point 1 to 2 to 6 results in a longer distance because of the double back maneuver. Accordingly, matched points 1 and 2 can be marked as unknown or not matched to provide a redetermined most probable 609 that starts directly from matched point 6 to avoid falsely matching observations points 1 and 2 to road segment 605.

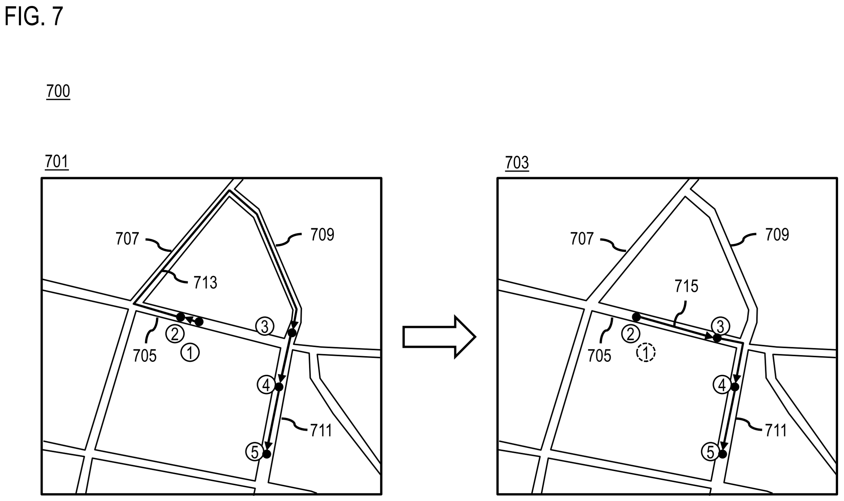

FIG. 7 illustrates an example 700 comprising conventional map matching results 701 based on a conventional path-based map matcher and improved map matching results 703 based on the resilient map matcher of the various embodiments described herein. In example 700, observations points 1-5 of a trajectory are map matched to a road network comprising road segments 705-711. In the conventional map matching results 701, the most probable path 713 traces a loop comprising road segments 705-709 based on the sequence of matched points 1-3. However, this loop is not likely to be realistic because there are no observed or matched points along the loop, and the loop likely the result of the directionality of matched points 1 to 2 caused by a false match of the point 1 to road segment 705.

In contrast, the improved map matching results 703 (generated according to the various embodiments described herein) marked point 1 as unknown or not matched. The most probable path 715 of the improved map matching results 703 is redetermined with the point 1 excluded using, e.g., the Viterbi algorithm. As a result, the most probable path 715 has a better transition from matched points 2-4 that eliminates the loop seen in the conventional map matching results 701.

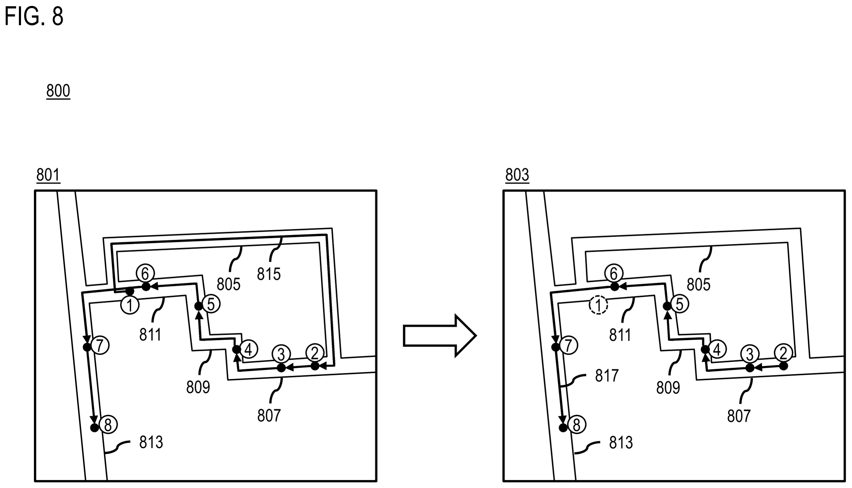

FIG. 8 illustrates an example 800 comprising conventional map matching results 801 based on a conventional path-based map matcher and improved map matching results 803 based on the resilient map matcher of the various embodiments described herein. In example 800, observations points 1-8 of a trajectory are map matched to a road network comprising road segments 805-813. In the conventional map matching results 801, the most probable path 815 traces a loop comprising road segments 811, 805, and 807 based on the sequence of matched points 1-2. However, similar to example 700 of FIG. 7, this loop is not likely to be realistic because there are no observed or matched points along the loop, and the loop likely the result of the directionality of matched points 1 to 2 caused by a false match of the point 1 to road segment 811.

In contrast, the improved map matching results 803 (generated according to the various embodiments described herein) marked point 1 as unknown or not matched. The most probable path 817 of the improved map matching results 803 is redetermined with the point 1 excluded using, e.g., the Viterbi algorithm. As a result, the most probable path 817 has a better transition from matched points 2-6 that eliminates the loop seen in the conventional map matching results 801.

In one embodiment, the approach of the various embodiments described herein is executable on streaming scenarios, batch scenarios, or on-device.

Returning to FIG. 1, as shown, the system 100 comprises one or more vehicles 107 and/or one or more UEs 109 that act as probes traveling over a road network (e.g., the transportation network 109). Although the vehicles 107 are depicted as automobiles, it is contemplated that the vehicles 107 can be any type of transportation vehicle, manned or unmanned (e.g., planes, aerial drone vehicles, motorcycles, boats, bicycles, etc.), and the UE 109 can be associated with any of the types of vehicles or a person or thing (e.g., a pedestrian) traveling within a transportation or road network. In one embodiment, each vehicle 107 and/or UE 109 is assigned a unique probe identifier (probe ID) for use in reporting or transmitting probe data collected by the vehicles 107 and UE 109. The vehicles 107 and UE 109, for instance, are part of a probe-based system for collecting probe data for monitoring a road network. In one embodiment, each vehicle 107 and/or UE 109 is configured to report probe data as probe points, which are individual data records collected at a point in time that records telemetry data for that point in time. The probe points can be reported from the vehicles 107 and/or UEs 109 in real-time, in batches, continuously, or at any other frequency requested by the system 100 over, for instance, the communication network 127 for processing by the map matching platform 103.

In one embodiment, a probe point can include attributes such as: probe ID, longitude, latitude, speed, and/or time. The list of attributes is provided by way of illustration and not limitation. Accordingly, it is contemplated that any combination of these attributes or other attributes may be recorded as a probe point (e.g., such as those previously discussed above). For example, attributes such as altitude (e.g., for flight capable vehicles or for tracking non-flight vehicles in the altitude domain), tilt, steering angle, wiper activation, traction control activation, ABS activation, etc. can be included and reported for a probe point. In one embodiment, if the probe point data includes altitude information, the transportation network, links, etc. can also be paths through an airspace (e.g., to track aerial drones, planes, other aerial vehicles, etc.), or paths that follow the contours or heights of a road network (e.g., heights of different ramps, bridges, or other overlapping road features).

In one embodiment, the vehicles 107 and/or UE 109 may include sensors for reporting measuring and/or reporting attributes. The attributes can also be any attribute normally collected by an on-board diagnostic (OBD) system of the vehicle, and available through an interface to the OBD system (e.g., OBD II interface or other similar interface).

In one embodiment, the system 100 can build trajectories using probe provider information and/or probe identifier (probe ID) information associated with the probe data. For example, the system 100 builds the trajectories by matching the probe points in the probe data according to probe identifier and sequencing the probe points according to time. In this way, the trajectory can identify the movement path of the respective probe or device within the bounded geographic area over a time range covered by the probe data. Because the trajectories are made of individual probe points, each point in the trajectory also has the properties or attributes recorded for each probe point. For example, at any given point along the trajectory, a heading, speed, position, etc. of the probe point can be determined for a candidate probe point. Then the existing trajectory to which a probe point might be added can be assumed by the system 100 to be equivalent to a link against which the probe point can be matched. Accordingly, attributes to the trajectory can then extracted to create a candidate probe point and link/trajectory pair for classification by the map matching platform 103.

In one embodiment, the map matching platform 103 performs the processes for map matching of the collected probe points according to various embodiments described herein. By way of example, the map matching platform 103 can be a standalone server or a component of another device with connectivity to the communication network 127. For example, the component can be part of an edge computing network where remote computing devices (not shown) are installed along or within proximity of a transportation network to provide map matching of probe data collected locally or within a local area served by the remote or edge computing device.

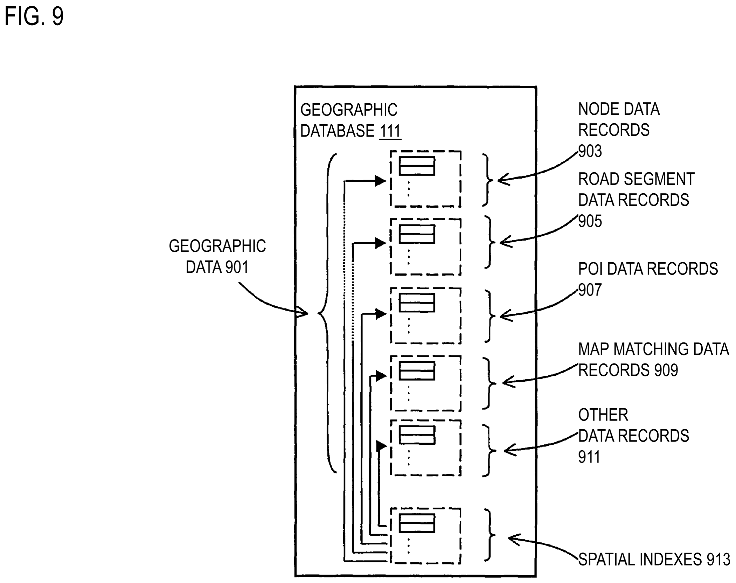

In one embodiment, the map matching platform 103 has connectivity or access to a geographic database 111 that includes mapping data about a road network (additional description of the geographic database 111 is provided below with respect to FIG. 9). In one embodiment, the probe data, map matching results, and/or related information can also be stored in the map matching results 113 and/or geographic database 111 by the map matching platform 103. In addition or alternatively, the probe data can be stored by another component of the system 100 in the geographic database 111 for subsequent retrieval and processing by the map matching platform 103.

In one embodiment, the vehicles 107 and/or UE 109 may execute an application 121 to present or use the results of map matching generated by the map matching platform 103 according to the embodiments described herein. For example, if the application 121 is a navigation application, then the map matching results can be used to determine positioning information, routing information, provide updated estimated times of arrival (ETAs), and the like.

By way of example, the UE 109 is any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the UE 109 can support any type of interface to the user (such as "wearable" circuitry, etc.). In one embodiment, the UE 109 may be associated with a vehicle 107 (e.g., cars), a component part of the vehicle 107, a mobile device (e.g., phone), and/or a combination of thereof. Similarly, the vehicle 107 may include computing components that can perform all or a portion of the functions of the UE 109.

By way of example, the application 121 may be any type of application that is executable at the vehicle 107 and/or the UE 109, such as mapping applications, location-based service applications, navigation applications, content provisioning services, camera/imaging application, media player applications, social networking applications, calendar applications, and the like. In one embodiment, the application 121 may act as a client for the map matching platform 103 and perform one or more functions of the map matching platform 103 alone or in combination with the platform 103.

In one embodiment, the vehicles 107 and/or the UE 109 are configured with various sensors for generating probe data. By way of example, the sensors for generating probe data may include a global positioning sensor for gathering location data (e.g., GPS), Light Detection And Ranging (LIDAR) for gathering distance data and/or generating depth maps, infrared sensors for thermal imagery, a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., the camera sensors may automatically capture obstruction for analysis and documentation purposes), an audio recorder for gathering audio data, velocity sensors mounted on steering wheels of the vehicles, switch sensors for determining whether one or more vehicle switches are engaged, and the like.

In another embodiment, the sensors of the vehicles 107 and/or UE 109 may include light sensors, orientation sensors augmented with height sensors and acceleration sensor (e.g., an accelerometer can measure acceleration and can be used to determine orientation of the vehicle), tilt sensors to detect the degree of incline or decline of the vehicle along a path of travel, moisture sensors, pressure sensors, etc. In a further example embodiment, sensors about the perimeter of the vehicle may detect the relative distance of the vehicle from lane or roadways, the presence of other vehicles, pedestrians, traffic lights, potholes and any other objects, or a combination thereof. In one scenario, the sensors may detect weather data, traffic information, or a combination thereof. In one example embodiment, the vehicles 107 and/or UE 109 may include GNSS receivers (e.g. GPS, Galileo, GLONASS or receivers) to obtain geographic coordinates from satellites for determining current location and time associated with the vehicle 107 and/or UE 109 for generating probe data. Further, the location can be determined by a triangulation system such as A-GPS, Cell of Origin, or other location extrapolation technologies.

The communication network 127 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

The services platform 115 may include any type of service 117. By way of example, the services 117 may include mapping services, navigation services, travel planning services, notification services, social networking services, content (e.g., audio, video, images, etc.) provisioning services, application services, storage services, contextual information determination services, location-based services, information based services (e.g., weather, news, etc.), etc. In one embodiment, the services platform 115 may interact with the map matching platform 103, the vehicle 107, the UE 109, and/or one or more content providers 119 to provide the services 117.

In one embodiment, the content providers 119 may provide content or data to the vehicles 107 and/or UEs 109, the map matching platform 103, and/or the services 117. The content provided may be any type of content, such as mapping content, textual content, audio content, video content, image content, etc. In one embodiment, the content providers 119 may provide content that may aid in the various embodiment of path-based map matching described herein. In one embodiment, the content providers 119 may also store content associated with the vehicles 107, the UE 109, the map matching platform 103, and/or the services 117. In another embodiment, the content providers 119 may manage access to a central repository of data, and offer a consistent, standard interface to data, such as a repository of probe data, probe features/attributes, link features/attributes, etc. Any known or still developing methods, techniques or processes for retrieving and/or accessing feature values for probe points and/or road links from one or more sources may be employed by the map matching platform 103.

By way of example, the vehicles 107, the UEs 109, the map matching platform 103, the services platform 115, and/or the content providers 119 communicate with each other and other components of the system 100 using well known, new or still developing protocols. In this context, a protocol includes a set of rules defining how the network nodes within the communication network 127 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

FIG. 9 is a diagram of a geographic database 111, according to one embodiment. In one embodiment, the geographic database 111 includes geographic data 901 used for (or configured to be compiled to be used for) mapping and/or navigation-related services. In one embodiment, the geographic database 111 include high resolution or high definition (HD) mapping data that provide centimeter-level or better accuracy of map features. For example, the geographic database 111 can be based on Light Detection and Ranging (LiDAR) or equivalent technology to collect billions of 3D points and model road surfaces and other map features down to the number lanes and their widths. In one embodiment, the HD mapping data (e.g., HD data records 911) capture and store details such as the slope and curvature of the road, lane markings, roadside objects such as sign posts, including what the signage denotes. By way of example, the HD mapping data enable highly automated vehicles to precisely localize themselves on the road, and to determine map data updates (e.g., learned speed limit values) to at high accuracy levels.

In one embodiment, geographic features (e.g., two-dimensional or three-dimensional features) are represented using polygons (e.g., two-dimensional features) or polygon extrusions (e.g., three-dimensional features). For example, the edges of the polygons correspond to the boundaries or edges of the respective geographic feature. In the case of a building, a two-dimensional polygon can be used to represent a footprint of the building, and a three-dimensional polygon extrusion can be used to represent the three-dimensional surfaces of the building. It is contemplated that although various embodiments are discussed with respect to two-dimensional polygons, it is contemplated that the embodiments are also applicable to three-dimensional polygon extrusions. Accordingly, the terms polygons and polygon extrusions as used herein can be used interchangeably.

In one embodiment, the following terminology applies to the representation of geographic features in the geographic database 111.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 111 follows certain conventions. For example, links do not cross themselves and do not cross each other except at a node. Also, there are no duplicated shape points, nodes, or links. Two links that connect each other have a common node. In the geographic database 111, overlapping geographic features are represented by overlapping polygons. When polygons overlap, the boundary of one polygon crosses the boundary of the other polygon. In the geographic database 111, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

In one embodiment, the geographic database 111 is stored as a hierarchical or multilevel tile-based projection or structure. More specifically, in one embodiment, the geographic database 111 may be defined according to a normalized Mercator projection. Other projections may be used. By way of example, the map tile grid of a Mercator or similar projection is a multilevel grid. Each cell or tile in a level of the map tile grid is divisible into the same number of tiles of that same level of grid. In other words, the initial level of the map tile grid (e.g., a level at the lowest zoom level) is divisible into four cells or rectangles. Each of those cells are in turn divisible into four cells, and so on until the highest zoom or resolution level of the projection is reached.

In one embodiment, the map tile grid may be numbered in a systematic fashion to define a tile identifier (tile ID). For example, the top left tile may be numbered 00, the top right tile may be numbered 01, the bottom left tile may be numbered 10, and the bottom right tile may be numbered 11. In one embodiment, each cell is divided into four rectangles and numbered by concatenating the parent tile ID and the new tile position. A variety of numbering schemes also is possible. Any number of levels with increasingly smaller geographic areas may represent the map tile grid. Any level (n) of the map tile grid has 2(n+1) cells. Accordingly, any tile of the level (n) has a geographic area of A/2(n+1) where A is the total geographic area of the world or the total area of the map tile grid 10. Because of the numbering system, the exact position of any tile in any level of the map tile grid or projection may be uniquely determined from the tile ID.

In one embodiment, the system 100 may identify a tile by a quadkey determined based on the tile ID of a tile of the map tile grid. The quadkey, for example, is a one-dimensional array including numerical values. In one embodiment, the quadkey may be calculated or determined by interleaving the bits of the row and column coordinates of a tile in the grid at a specific level. The interleaved bits may be converted to a predetermined base number (e.g., base 10, base 4, hexadecimal). In one example, leading zeroes are inserted or retained regardless of the level of the map tile grid in order to maintain a constant length for the one-dimensional array of the quadkey. In another example, the length of the one-dimensional array of the quadkey may indicate the corresponding level within the map tile grid 10. In one embodiment, the quadkey is an example of the hash or encoding scheme of the respective geographical coordinates of a geographical data point that can be used to identify a tile in which the geographical data point is located.

As shown, the geographic database 111 includes node data records 903, road segment or link data records 905, POI data records 907, map matching data records 909, HD mapping data records 911, and indexes 913, for example. More, fewer, or different data records can be provided. In one embodiment, additional data records (not shown) can include cartographic ("carto") data records, routing data, and maneuver data. In one embodiment, the indexes 913 may improve the speed of data retrieval operations in the geographic database 111. In one embodiment, the indexes 913 may be used to quickly locate data without having to search every row in the geographic database 111 every time it is accessed. For example, in one embodiment, the indexes 913 can be a spatial index of the polygon points associated with stored feature polygons.

In exemplary embodiments, the road segment data records 905 are links or segments representing roads, streets, or paths, as can be used in the calculated route or recorded route information for determination of one or more personalized routes. The node data records 903 are end points corresponding to the respective links or segments of the road segment data records 905. The road link data records 905 and the node data records 903 represent a road network, such as used by vehicles, cars, and/or other entities. Alternatively, the geographic database 111 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 111 can include data about the POIs and their respective locations in the POI data records 907. The geographic database 111 can also include data about places, such as cities, towns, or other communities, and other geographic features, such as bodies of water, mountain ranges, etc. Such place or feature data can be part of the POI data records 907 or can be associated with POIs or POI data records 907 (such as a data point used for displaying or representing a position of a city).

In one embodiment, the geographic database 111 includes map matching data records 909 which store probe point data, probe feature/attribute values, feature set data, map matching classifications, and/or related information. For example, the map matching data records 909 can store collected probe point data for map matching, and/or the ground truth probe point data collected to train a machine learning classifier of the map matching platform 103. In yet another embodiment, the probe data records 909 can store processed probe point data and/or map matching results into data buckets for matched probe points and for unmatched probe points.

In one embodiment, as discussed above, the HD mapping data records 911 model road surfaces and other map features to centimeter-level or better accuracy. The HD mapping data records 911 also include lane models that provide the precise lane geometry with lane boundaries, as well as rich attributes of the lane models. These rich attributes include, but are not limited to, lane traversal information, lane types, lane marking types, lane level speed limit information, and/or the like. In one embodiment, the HD mapping data records 911 are divided into spatial partitions of varying sizes to provide HD mapping data to vehicles 107 and other end user devices with near real-time speed without overloading the available resources of the vehicles 107 and/or devices (e.g., computational, memory, bandwidth, etc. resources).

In one embodiment, the HD mapping data records 911 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the HD mapping data records 911.

In one embodiment, the HD mapping data records 911 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time also at centimeter-level accuracy. Other sensor data can include vehicle telemetry or operational data such as windshield wiper activation state, braking state, steering angle, accelerator position, and/or the like.

In one embodiment, the geographic database 111 can be maintained by the content provider 119 in association with the services platform 115 (e.g., a map developer). The map developer can collect geographic data to generate and enhance the geographic database 111. There can be different ways used by the map developer to collect data. These ways can include obtaining data from other sources, such as municipalities or respective geographic authorities. In addition, the map developer can employ field personnel to travel by vehicle (e.g., vehicle 107 and/or user device 109) along roads throughout the geographic region to observe features and/or record information about them, for example. Also, remote sensing, such as aerial or satellite photography, can be used.

The geographic database 111 can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF)) to organize and/or configure the data for performing navigation-related functions and/or services, such as route calculation, route guidance, map display, speed calculation, distance and travel time functions, and other functions, by a navigation device, such as by a vehicle 107 or user device 109. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for providing a path-based map matcher may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

Additionally, as used herein, the term 'circuitry' may refer to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular device, other network device, and/or other computing device.

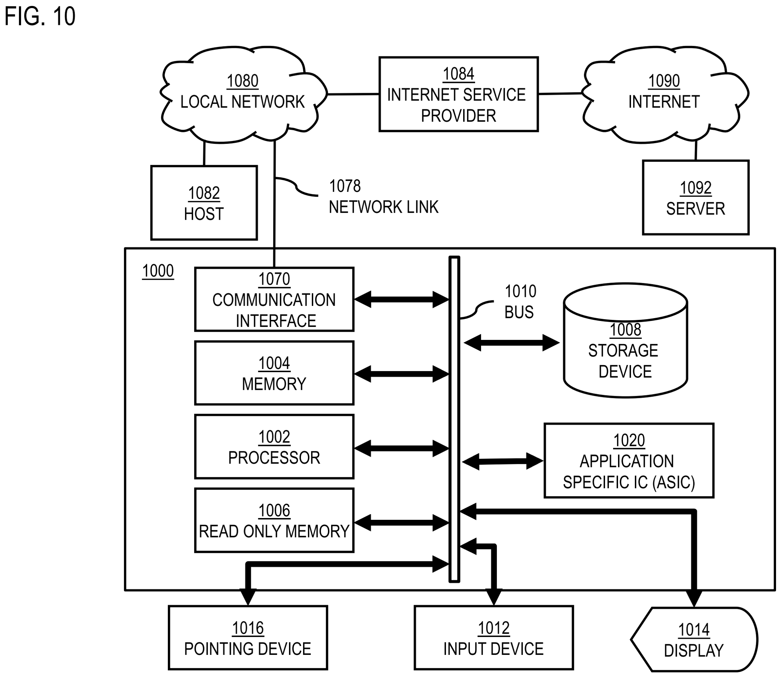

FIG. 10 illustrates a computer system 1000 upon which an embodiment of the invention may be implemented. Computer system 1000 is programmed (e.g., via computer program code or instructions) to provide a path-based map matcher as described herein and includes a communication mechanism such as a bus 1010 for passing information between other internal and external components of the computer system 1000. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1010 includes one or more parallel conductors of information so that information is transferred quickly among devices coupled to the bus 1010. One or more processors 1002 for processing information are coupled with the bus 1010.

A processor 1002 performs a set of operations on information as specified by computer program code related to providing a path-based map matcher. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1010 and placing information on the bus 1010. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1002, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1000 also includes a memory 1004 coupled to bus 1010. The memory 1004, such as a random access memory (RAM) or other dynamic storage device, stores information including processor instructions for providing a path-based map matcher. Dynamic memory allows information stored therein to be changed by the computer system 1000. RAM allows a unit of information stored at a location called a memory address to be stored and retrieved independently of information at neighboring addresses. The memory 1004 is also used by the processor 1002 to store temporary values during execution of processor instructions. The computer system 1000 also includes a read only memory (ROM) 1006 or other static storage device coupled to the bus 1010 for storing static information, including instructions, that is not changed by the computer system 1000. Some memory is composed of volatile storage that loses the information stored thereon when power is lost. Also coupled to bus 1010 is a non-volatile (persistent) storage device 1008, such as a magnetic disk, optical disk or flash card, for storing information, including instructions, that persists even when the computer system 1000 is turned off or otherwise loses power.

Information, including instructions for providing a path-based map matcher, is provided to the bus 1010 for use by the processor from an external input device 1012, such as a keyboard containing alphanumeric keys operated by a human user, or a sensor. A sensor detects conditions in its vicinity and transforms those detections into physical expression compatible with the measurable phenomenon used to represent information in computer system 1000. Other external devices coupled to bus 1010, used primarily for interacting with humans, include a display device 1014, such as a cathode ray tube (CRT) or a liquid crystal display (LCD), or plasma screen or printer for presenting text or images, and a pointing device 1016, such as a mouse or a trackball or cursor direction keys, or motion sensor, for controlling a position of a small cursor image presented on the display 1014 and issuing commands associated with graphical elements presented on the display 1014. In some embodiments, for example, in embodiments in which the computer system 1000 performs all functions automatically without human input, one or more of external input device 1012, display device 1014 and pointing device 1016 is omitted.

In the illustrated embodiment, special purpose hardware, such as an application specific integrated circuit (ASIC) 1020, is coupled to bus 1010. The special purpose hardware is configured to perform operations not performed by processor 1002 quickly enough for special purposes. Examples of application specific ICs include graphics accelerator cards for generating images for display 1014, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1000 also includes one or more instances of a communications interface 1070 coupled to bus 1010. Communication interface 1070 provides a one-way or two-way communication coupling to a variety of external devices that operate with their own processors, such as printers, scanners, and external disks. In general the coupling is with a network link 1078 that is connected to a local network 1080 to which a variety of external devices with their own processors are connected. For example, communication interface 1070 may be a parallel port or a serial port or a universal serial bus (USB) port on a personal computer. In some embodiments, communications interface 1070 is an integrated services digital network (ISDN) card or a digital subscriber line (DSL) card or a telephone modem that provides an information communication connection to a corresponding type of telephone line. In some embodiments, a communication interface 1070 is a cable modem that converts signals on bus 1010 into signals for a communication connection over a coaxial cable or into optical signals for a communication connection over a fiber optic cable. As another example, communications interface 1070 may be a local area network (LAN) card to provide a data communication connection to a compatible LAN, such as Ethernet. Wireless links may also be implemented. For wireless links, the communications interface 1070 sends or receives or both sends and receives electrical, acoustic, or electromagnetic signals, including infrared and optical signals, that carry information streams, such as digital data. For example, in wireless handheld devices, such as mobile telephones like cell phones, the communications interface 1070 includes a radio band electromagnetic transmitter and receiver called a radio transceiver. In certain embodiments, the communications interface 1070 enables connection to the communication network 127 for providing a path-based map matcher.

The term computer-readable medium is used herein to refer to any medium that participates in providing information to processor 1002, including instructions for execution. Such a medium may take many forms, including, but not limited to, non-volatile media, volatile media, and transmission media. Non-volatile media include, for example, optical or magnetic disks, such as storage device 1008. Volatile media include, for example, dynamic memory 1004. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization, or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1078 typically provides information communication using transmission media through one or more networks to other devices that use or process the information. For example, network link 1078 may provide a connection through local network 1080 to a host computer 1082 or to equipment 1084 operated by an Internet Service Provider (ISP). ISP equipment 1084 in turn provides data communication services through the public, world-wide packet-switching communication network of networks now commonly referred to as the Internet 1090.

A computer called a server host 1092 connected to the Internet hosts a process that provides a service in response to information received over the Internet. For example, server host 1092 hosts a process that provides information representing video data for presentation at display 1014. It is contemplated that the components of system can be deployed in various configurations within other computer systems, e.g., host 1082 and server 1092.

FIG. 11 illustrates a chip set 1100 upon which an embodiment of the invention may be implemented. Chip set 1100 is programmed to provide a path-based map matcher as described herein and includes, for instance, the processor and memory components described with respect to FIG. 10 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1100 includes a communication mechanism such as a bus 1101 for passing information among the components of the chip set 1100. A processor 1103 has connectivity to the bus 1101 to execute instructions and process information stored in, for example, a memory 1105. The processor 1103 may include one or more processing cores with each core configured to perform independently. A multi-core processor enables multiprocessing within a single physical package. Examples of a multi-core processor include two, four, eight, or greater numbers of processing cores. Alternatively or in addition, the processor 1103 may include one or more microprocessors configured in tandem via the bus 1101 to enable independent execution of instructions, pipelining, and multithreading. The processor 1103 may also be accompanied with one or more specialized components to perform certain processing functions and tasks such as or one or more application-specific integrated circuits (ASIC) 1107. For example, an ASIC 1109 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1103 and accompanying components have connectivity to the memory 1105 via the bus 1101. The memory 1105 includes both dynamic memory (e.g., RAM, magnetic disk, writable optical disk, etc.) and static memory (e.g., ROM, CD-ROM, etc.) for storing executable instructions that when executed perform the inventive steps described herein to provide a path-based map matcher. The memory 1105 also stores the data associated with or generated by the execution of the inventive steps.

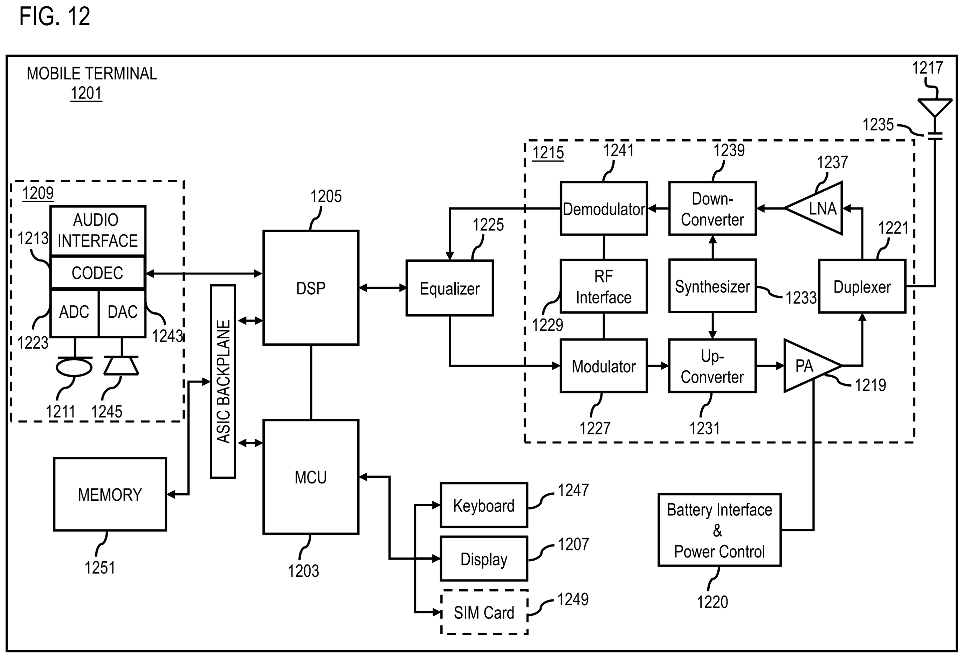

FIG. 12 is a diagram of exemplary components of a mobile terminal (e.g., handset) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1203, a Digital Signal Processor (DSP) 1205, and a receiver/transmitter unit including a microphone gain control unit and a speaker gain control unit. A main display unit 1207 provides a display to the user in support of various applications and mobile station functions that offer automatic contact matching. An audio function circuitry 1209 includes a microphone 1211 and microphone amplifier that amplifies the speech signal output from the microphone 1211. The amplified speech signal output from the microphone 1211 is fed to a coder/decoder (CODEC) 1213.

A radio section 1215 amplifies power and converts frequency in order to communicate with a base station, which is included in a mobile communication system, via antenna 1217. The power amplifier (PA) 1219 and the transmitter/modulation circuitry are operationally responsive to the MCU 1203, with an output from the PA 1219 coupled to the duplexer 1221 or circulator or antenna switch, as known in the art. The PA 1219 also couples to a battery interface and power control unit 1220.

In use, a user of mobile station 1201 speaks into the microphone 1211 and his or her voice along with any detected background noise is converted into an analog voltage. The analog voltage is then converted into a digital signal through the Analog to Digital Converter (ADC) 1223. The control unit 1203 routes the digital signal into the DSP 1205 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, 5G New Radio networks, code division multiple access (CDMA), wireless fidelity (WiFi), satellite, and the like.

The encoded signals are then routed to an equalizer 1225 for compensation of any frequency-dependent impairments that occur during transmission though the air such as phase and amplitude distortion. After equalizing the bit stream, the modulator 1227 combines the signal with a RF signal generated in the RF interface 1229. The modulator 1227 generates a sine wave by way of frequency or phase modulation. In order to prepare the signal for transmission, an up-converter 1231 combines the sine wave output from the modulator 1227 with another sine wave generated by a synthesizer 1233 to achieve the desired frequency of transmission. The signal is then sent through a PA 1219 to increase the signal to an appropriate power level. In practical systems, the PA 1219 acts as a variable gain amplifier whose gain is controlled by the DSP 1205 from information received from a network base station. The signal is then filtered within the duplexer 1221 and optionally sent to an antenna coupler 1235 to match impedances to provide maximum power transfer. Finally, the signal is transmitted via antenna 1217 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1201 are received via antenna 1217 and immediately amplified by a low noise amplifier (LNA) 1237. A down-converter 1239 lowers the carrier frequency while the demodulator 1241 strips away the RF leaving only a digital bit stream. The signal then goes through the equalizer 1225 and is processed by the DSP 1205. A Digital to Analog Converter (DAC) 1243 converts the signal and the resulting output is transmitted to the user through the speaker 1245, all under control of a Main Control Unit (MCU) 1203-which can be implemented as a Central Processing Unit (CPU) (not shown).

The MCU 1203 receives various signals including input signals from the keyboard 1247. The keyboard 1247 and/or the MCU 1203 in combination with other user input components (e.g., the microphone 1211) comprise a user interface circuitry for managing user input. The MCU 1203 runs a user interface software to facilitate user control of at least some functions of the mobile station 1201 to provide a path-based map matcher. The MCU 1203 also delivers a display command and a switch command to the display 1207 and to the speech output switching controller, respectively. Further, the MCU 1203 exchanges information with the DSP 1205 and can access an optionally incorporated SIM card 1249 and a memory 1251. In addition, the MCU 1203 executes various control functions required of the station. The DSP 1205 may, depending upon the implementation, perform any of a variety of conventional digital processing functions on the voice signals. Additionally, DSP 1205 determines the background noise level of the local environment from the signals detected by microphone 1211 and sets the gain of microphone 1211 to a level selected to compensate for the natural tendency of the user of the mobile station 1201.

The CODEC 1213 includes the ADC 1223 and DAC 1243. The memory 1251 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1251 may be, but not limited to, a single memory, CD, DVD, ROM, RAM, EEPROM, optical storage, or any other non-volatile or non-transitory storage medium capable of storing digital data.

An optionally incorporated SIM card 1249 carries, for instance, important information, such as the cellular phone number, the carrier supplying service, subscription details, and security information. The SIM card 1249 serves primarily to identify the mobile station 1201 on a radio network. The card 1249 also contains a memory for storing a personal telephone number registry, text messages, and user specific mobile station settings.

The following exemplary embodiments are also disclosed:
Embodiment 1: A computer-implemented method for map-matching a trajectory comprising:
   executing a first pass map-matching process to determine one or more on-road candidate matches for each observation point of the trajectory based on one or more emission probabilities, wherein the one or more on-road candidate matches correspond to one or more road segments of digital map data of a geographic database;
   determining one or more transition probabilities between two or more on-road candidates of subsequent observations;
   determining a most probable path based on the one or more emission probabilities and the one or more transition probabilities;
   determining a set of a predetermined number of matches from the most probable path, wherein the set includes at least one transition among the predetermined number of matches in the set;
   marking at least one match in the set as not matched based on determining that an alternate transition with a higher transition probability than the at least one transition exists;
   redetermining the most probable path using a second pass map-matching process based on the at least one marked match; and
   providing the redetermined most probable path as an output.
Embodiment 2: The method of embodiment 1, wherein the set is determined within a threshold number of matches or a threshold distance from a beginning or an end of the trajectory.
Embodiment 3: The method of embodiment 1, wherein the determining that the alternate transition exists is based on a transition path of the alternate transition normalized by a straight line distance between at least two or more on-road candidate matches in the set, a transition path of the at least one transition normalized by the straight line distance between the at least two or more on-road candidate matches in the set, or a combination thereof.
Embodiment 4: The method of embodiment 1, wherein the determining that the alternate transition exists is based on a distance of the at least one transition determined in the first pass map-matching process and a distance of the alternate transition.
Embodiment 5: The method of embodiment 1, wherein the determining that the alternate transition exists is based on determining that a distance of the at least one transition determined in the first pass of the map-matching process is at least a predetermined value greater than a distance of the alternate transition.
Embodiment 6: The method of embodiment 1, wherein the at least one marked match is excluded from the redetermining of the most probable path.
Embodiment 7: The method of embodiment 1, wherein the set of predetermined number of matches is iteratively evaluated as a sliding window over the trajectory.
Embodiment 8: The method of embodiment 7, wherein the iterative evaluation ends based on determining that there are no remaining alternate transitions.
Embodiment 9: The method of embodiment 7, wherein the iterative evaluation ends based on determining that that sliding window is more than a threshold number of observation points, a threshold distance, or a combination thereof from a beginning or an end of the trajectory.
Embodiment 10: The method of embodiment 1, wherein the first pass map-matching process, the second pass map-matching process, or a combination thereof is based on a Hidden Markov Model.
Embodiment 11: The method of embodiment 1, wherein the most probable path, the redetermined most probable path, or a combination thereof are determined based on a Viterbi algorithm.
Embodiment 12: An apparatus for map-matching a trajectory comprising:
   at least one processor; and
   at least one memory including computer program code for one or more programs,
   the at least one memory and the computer program code configured to, with the at least one processor, cause the apparatus to perform at least the following,
      execute a first pass map-matching process to determine one or more on-road candidate matches for each observation point of the trajectory based on one or more emission probabilities, wherein the one or more on-road candidate matches correspond to one or more road segments of digital map data of a geographic database;
      determine one or more transition probabilities between two or more on-road candidates of subsequent observations;
      determine a most probable path based on the one or more emission probabilities and the one or more transition probabilities;
      determine a set of a predetermined number of matches from the most probable path, wherein the set includes at least one transition among the predetermined number of matches in the set;
      mark at least one match in the set as not matched based on determining that an alternate transition with a higher transition probability than the at least one transition exists;
      redetermine the most probable path using a second pass map-matching process based on the at least one marked match; and
      provide the redetermined most probable path as an output.
Embodiment 13: The apparatus of embodiment 12, wherein the set is determined within a threshold number of observation points or a threshold distance from a beginning or an end of the trajectory.
Embodiment 14: The apparatus of embodiment 12, wherein the determining that the alternate transition exists is based on a transition path of the alternate transition normalized by a straight line distance between at least two or more on-road candidate matches in the set, a transition path of the at least one transition normalized by the straight line distance between the at least two or more on-road candidate matches in the set, or a combination thereof.
Embodiment 15: The apparatus of embodiment 12, wherein the determining that the alternate transition exists is based on a distance of the at least one transition determined in the first pass map-matching process and a distance of the alternate transition.
Embodiment 16: The apparatus of embodiment 12, wherein the determining that the alternate transition exists is based on determining that a distance of the at least one transition determined in the first pass map-matching process is at least a predetermined value or a constant threshold greater than a distance of the alternate transition.
Embodiment 17: A non-transitory computer-readable storage medium map-matching a trajectory, carrying one or more sequences of one or more instructions which, when executed by one or more processors, cause an apparatus to at least perform the following steps:
   executing a first pass map-matching process to determine one or more on-road candidate matches for each observation point of the trajectory based on one or more emission probabilities, wherein the one or more on-road candidate matches correspond to one or more road segments of digital map data of a geographic database;
   determining one or more transition probabilities between two or more on-road candidates of subsequent observations;
   determining a most probable path based on the one or more emission probabilities and the one or more transition probabilities;
   determining a set of a predetermined number of matches from the most probable path, wherein the set includes at least one transition among the predetermined number of matches in the set;
   marking at least one match in the set as not matched based on determining that an alternate transition with a higher transition probability than the at least one transition exists;
   redetermining the most probable path using a second pass map-matching process based on the at least one marked match; and
   providing the redetermined most probable path as an output.
Embodiment 18: The non-transitory computer-readable storage medium of embodiment 17, wherein the set is determined within a threshold number of observation points or a threshold distance from a beginning or an end of the trajectory.
Embodiment 19: The non-transitory computer-readable storage medium of embodiment 17, wherein the determining that the alternate transition exists is based on a transition path of the alternate transition normalized by a straight line distance between at least two or more on-road candidate matches in the set, a transition path of the at least one transition normalized by the straight line distance between the at least two or more on-road candidate matches in the set, or a combination thereof.
Embodiment 20: The non-transitory computer-readable storage medium of embodiment 17, wherein the determining that the alternate transition with the higher transition probability than the at least one transition exists is based on a distance of the at least one transition determined in the first pass map-matching process and a distance of the alternate transition.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. A computer-implemented method for map-matching a trajectory comprising:
executing a first pass map-matching process to determine one or more on-road candidate matches for each observation point of the trajectory based on one or more emission probabilities, wherein the one or more on-road candidate matches correspond to one or more road segments of digital map data of a geographic database;
determining one or more transition probabilities between two or more on-road candidates of subsequent observations;
determining a most probable path based on the one or more emission probabilities and the one or more transition probabilities;
determining a set of a predetermined number of matches from the most probable path, wherein the set includes at least one transition among the predetermined number of matches in the set;
marking at least one match in the set as not matched based on determining that an alternate transition with a higher transition probability than the at least one transition exists;
redetermining the most probable path using a second pass map-matching process based on the at least one marked match; and
providing the redetermined most probable path as an output.

2. The method of claim 1, wherein the set is determined within a threshold number of matches or a threshold distance from a beginning or an end of the trajectory.

3. The method of claim 1 or 2, wherein the determining that the alternate transition exists is based on a transition path of the alternate transition normalized by a straight line distance between at least two or more on-road candidate matches in the set, a transition path of the at least one transition normalized by the straight line distance between the at least two or more on-road candidate matches in the set, or a combination thereof.

4. The method of claim 1 or 2, wherein the determining that the alternate transition exists is based on a distance of the at least one transition determined in the first pass map-matching process and a distance of the alternate transition.

5. The method of claim 1 or 2,wherein the determining that the alternate transition exists is based on determining that a distance of the at least one transition determined in the first pass of the map-matching process is at least a predetermined value greater than a distance of the alternate transition.

6. The method of any of claims 1 to 5, wherein the at least one marked match is excluded from the redetermining of the most probable path.

7. The method of any of claims 1 to 6, wherein the set of predetermined number of matches is iteratively evaluated as a sliding window over the trajectory.

8. The method of claim 7, wherein the iterative evaluation ends based on determining that there are no remaining alternate transitions.

9. The method of claim 7, wherein the iterative evaluation ends based on determining that that sliding window is more than a threshold number of observation points, a threshold distance, or a combination thereof from a beginning or an end of the trajectory.

10. The method of any of claims 1 to 9, wherein the first pass map-matching process, the second pass map-matching process, or a combination thereof is based on a Hidden Markov Model.

11. The method of any of claims 1 to 10, wherein the most probable path, the redetermined most probable path, or a combination thereof are determined based on a Viterbi algorithm.

12. An apparatus for map-matching a trajectory comprising means configured for performing the computer-implemented method according to any of claims 1 to 11.

13. The apparatus of claim 12, wherein said means comprise at least one processor; andat least one memory including computer program code for one or more programs, the at least one memory and the computer program code configured to, with the at least one processor, cause the apparatus to perform the computer-implemented method according to any of claims 1 to 11.

14. A computer program product comprising instructions which, when the program is executed by an apparatus, cause the apparatus to perform the computer-implemented method according to any of claims 1 to 11.

15. The computer program of claim 14, wherein the computer program is stored on a non-transitory computer-readable storage medium.
